# EUROPÄISCHE PATENTSCHRIFT

(11) **EP 0 984 188 B1**
(45) Veröffentlichungstag und Bekanntmachung des Hinweises auf die Patenterteilung: **24.10.2001**
(21) Anmeldenummer: 99124666.1
(22) Anmeldetag: 05.03.1997
(51) Int. Cl.: F16D 65/097

(54) **Teilbelagscheibenbremse**
Partly lined disk brake
Frein à disque à garniture partielle

(30) Priorität: 18.03.1996 DE 19610611
(43) Veröffentlichungstag der Anmeldung: 08.03.2000
(62) Teilanmeldung aus: 97907072.9
(73) Patentinhaber: LUCAS INDUSTRIES PUBLIC LIMITED COMPANY, Solihull, West Midlands B91 2TX (GB)
(72) Erfinder: Lieber, Kristine, 56337 Eitelborn (DE); Walden, Michael Felix Maria, 56626 Andernach (DE)
(74) Vertreter: Schmidt, Steffen J., Dipl.-Ing.

(56) Entgegenhaltungen:
- GB-A- 2 114 243
- US-A- 4 429 769
- US-A- 4 607 728
- US-A- 4 609 077

## Beschreibung

Die vorliegende Erfindung betrifft eine Teilbelagscheibenbremse gemäß dem Oberbegriff des Patentanspruchs 1. Ferner betrifft die Erfindung ein Federelement für eine Teilbelagscheibenbremse.

Die erfindungsgemäße Teilbelag-Scheibenbremse ist insbesondere eine Schwimmsattel-Teilbelag-Scheibenbremse mit einer Niederhaltefeder, auch als Belaghaltefeder bezeichnet, welche die Bremsbeläge zuverlässig an Abstützungen des Bremsträgers beziehungsweise des Achsschenkels befestigt.

Aus der US-A-4 429 769 ist eine Schwimmsattel-Scheibenbremse mit einer Halteeinrichtung bekannt, an der zwei im Abstand zueinander angeordnete Reibklötze gehalten sind, die zwischen sich eine sich um eine Rotationsachse drehende Scheibe aufnehmen, wobei die beiden Reibklötze mit der Scheibe durch eine Zustellbewegung in Eingriff bringbar sind. Die Schwimmsattel-Scheibenbremse weist zwei Führungsplatten auf, die je einen Halteabschnitt für jeden der Reibklötze aufweisen, so daß die Reibklötze in einer zur Rotationsachse senkrechten Position gehalten sind. Die Führungsplatten weisen ferner je einen Haken auf, mittels dem die gehalterten Reibklötze zusammen mit den Führungsplatten an einem Sattel befestigbar sind. Die den Sattel, die Führungsplatten und die Reibklötze umfassende Baueinheit kann mit Hilfe zweier sich axial erstreckender Montageabschnitte auf Führungsstiften an einem ortsfesten Element montiert werden. Diese Montage erfolgt dabei in zur Rotationsachse axialer Richtung. Nach der Montage sind die Führungsplatten mit Hilfe je eines Rippenabschnitts in radialer Richtung gehalten. Die axiale Montage der Baueinheit erfordert es, daß die Bremsscheibe erst nachträglich montiert wird.

Die GB-A-2 114 243 beschreibt eine Scheibenbremsenanordnung mit einer Belaghaltefeder, die drei Federabschnitte aufweist. Ein erster Federabschnitt umgreift C-förmig einen Armabschnitt eines Achsschenkels. Ein zweiter Federabschnitt ist an je einem axialen Ende der Belaghaltefeder angeordnet, umgreift dort den Armabschnitt und hält somit die Belaghaltefeder in axialer Richtung. Der dritte Federabschnitt erstreckt sich vom ersten Federabschnitt aus radial nach innen und drängt einen eingesetzten Reibklotz zum Zentrum einer Bremsscheibe. Die Belaghaltefeder wird an einem Kuppelelement angebracht und anschließend die Reibklötze radial eingesetzt, auf die wiederum ein Sattel radial aufgesetzt wird. Ein Vormontieren einer die Reibklötze und den Sattel umfassenden Baueinheit ist nicht möglich.

Aus der DE 1 775 586 C3 ist eine Teilbelagscheibenbremse mit einem Paar Seitenflächen, von denen mindestens je ein Abschnitt zur Übertragung von Bremskräften an einem tragenden Bremsenteil abstützbar ist, einem Paar Aussparungen, einem Paar Führungskörper, die in je einer der Aussparungen aufgenommen sind, und einer mit den Führungskörpern verbundenen Rückstellfederanordnung bekannt. Dabei sind Führungskörper und Rückstellfederanordnung an einem gemeinsamen Halteblech für beide Bremsbeläge ausgebildet, das sowohl senkrecht zur Bremsscheibenebene als auch in Umfangsrichtung der Bremsscheibe gesehen um mehr als 90° nach innen verlaufende Abbiegungen aufweist. Die beiden parallel zur Bremsscheibenebene verlaufenden Abbiegungen sind in entsprechende Rillen eines Bremssattels eingerastet, und die beiden anderen, senkrecht zur Bremsscheibe verlaufenden Abbiegungen greifen als Führungskörper in seitliche Aussparungen der Bremsbeläge ein und sollen die herkömmlichen Haltestifte ersetzen. Die Rückstellfederanordnung ist von einer Blattfeder gebildet, die in ihrer Mitte mit dem Halteblech vernietet ist und symmetrisch dazu ein Paar S-förmig gebogener Federabschnitte aufweist. Mit diesen Federabschnitten übt die Blattfeder eine schräg nach unten und außen gerichtete Kraft auf eine Oberkante je eines der beiden Bremsbeläge aus, um diese nach jeder Bremsbetätigung von der Bremsscheibe wegzudrücken.

Aus der DE 79 31 220 U1 ist eine Scheibenbremse bekannt, die einen Bremsträger aufweist, in welchem mindestens ein Bremsbelag zur Bremsscheibe und von der Bremsscheibe weg verschiebbar angebracht ist. Der oder jeder Bremsbelag hat dabei einen Rückenplattenbereich, der sich an den beiden entgegengesetzten Seiten des Bremsbelags bis in die Nähe des Bremsträgers erstreckt. An diesem Rückenplattenbereich ist an den beiden entgegengesetzten Seiten eine Feder befestigt. Die Federn der bzw. jeder Bremsbelag erstrecken sich in Reibungseingriff mit dem Bremsträger, so daß bei einer Bewegung des oder jedes Bremsbelages zur Bremsscheibe die entsprechenden Federn belastet werden und beim Aufheben des Bremsdrucks dieser das Wegbewegen der Bremsbeläge von der Bremsscheibe bewirkt.

Durch die Forderungen nach Leichtbauweise und kostenreduzierten Baugruppen sowie einer schnellen Montage der Baugruppen durch den Automobilhersteller geht die Entwicklung dahin, daß aus mehreren kleineren Baugruppen, die oftmals von verschiedenen Lieferanten stammen und bisher beim Fahrzeughersteller zusammengesetzt wurden, vorab eine größere Baugruppe geschaffen wird, die dann beim Automobilhersteller montiert wird. Hierdurch kann die Montagezeit und der logistische Aufwand beim Fahrzeughersteller vermindert werden.

Durch den Zusammenschluß von kleineren Baugruppen kann oftmals auch die eine (größere) Baugruppe vereinfacht werden.

Ein solcher Zusammenschluß von Baugruppen kann darin bestehen, daß der Achsschenkel und der Bremsträger als ein einziges Teil ausgebildet werden. Die Erfindung ist für eine derartige Integration des Bremsträgers mit dem Achsschenkel geeignet, aber nicht darauf beschränkt.

Bei einem derartigen Zusammenschluß kleinerer Baugruppen kann sich die Schwierigkeit ergeben, daß Kräfte von Federn, die die Bremsbeläge auf ihren Führungen hielten, nicht mehr in der bisher üblichen Weise aufgebracht werden können. Bei vom Achsschenkel getrenntem Schwimmsattel mit Bremsbelägen, fehlen die Arme des Bremsträgers, welche die Reaktionskräfte der Federn aufnehmen.

Wenn die Forderung besteht, daß die Unterbaugruppe dennoch möglichst den Schwimmsattel, die Bremsbeläge und die Federn vereinen soll, dann sind Anordnungen mit Federn, die Kräfte zwischen den Bremsbelägen und dem Bremssattel erzeugen, nicht mehr ohne weiteres verwendbar.

Auch kann das Abstützen der Federkräfte einerseits am Bremssattel und andererseits am Bremsträger die Verschiebbarkeit des Bremssattels erschweren, mit der Folge, daß die Bremsbeläge nach Lösen der Bremse in leichter Berührung mit der Bremsscheibe verbleiben.

Ausgehend von diesen bekannten Anordnungen liegt der Erfindung die Aufgabe zugrunde, eine Teilbelagscheibenbremse bereit zu stellen, die die vorstehenden Schwierigkeiten beseitigt.

Dazu weist erfindungsgemäß bei der eingangs erwähnten Teilbelagscheibenbremse das Federelement zwei Führungsflächen auf, aus denen je wenigstens eine Zunge abgewinkelt heraussteht, die den Halteabschnitt bildet und die Bremsbeläge mit dem Bremsträger verrastet, so daß die Baueinheit zur Rotationsachse radial montierbar ist. Ferner ist die Aufgabe durch ein derartiges Federelement gelöst.

Der Erfindung liegt dabei die Erkenntnis zugrunde, daß das Federelement als zentrale Funktionen übernehmendes Bauteil auszubilden ist, das folgende Aufgaben erfüllt:
Das Federelement soll unter anderem
- an den Bremsbacken leicht befestigbar sein,
- mit den Bremsbacken eine zuverlässige Verbindung eingehen, aus der die Bremsbacken leicht herausnehmbar sind,
- keine Kräfte auf die Gleitführung des Schwimmsattels ausüben.

Das erfindungsgemäße Federelement kann darüberhinaus die Bremsbacken haltern und zusammen mit diesen leicht radial befestigt werden. Ferner kann das Federelement mit dem Bremsträger eine zuverlässige Verbindung eingehen, wobei das Federelement und die Bremsbacken aus dem Bremsträger leicht axial herausnehmbar sind.

Vorteilhafte Weiterbildungen sind in den Unteransprüchen beschrieben.

Weitere Merkmale, Eigenschaften und Vorteile werden anhand der nachstehenden Beschreibung eines Ausführungsbeispiels unter Bezugnahme auf die Zeichnung erläutert, in denen
- Fig. 1: die Draufsicht auf eine, um 180° gedrehte Scheibenbremse zeigt,
- Fig. 2: eine teilweise geschnittene Seitenansicht der Scheibenbremse gemäß Fig. 1 zeigt,
- Fig. 3: eine perspektivische Vorderansicht eines Federelementes für die Scheibenbremse gemäß Fig. 1 zeigt,
- Fig. 4: eine perspektivische Rückansicht des Federelementes gemäß Fig. 3 zeigt,
- Fig. 5: das Federelement gemäß Fig. 3 in Vorderansicht zeigt,
- Fig. 6: das Federelement gemäß Fig. 3 in Seitenansicht zeigt,
- Fig. 7: das Federelement gemäß Fig. 3 in Draufsicht zeigt,
- Fig. 8: die perspektivische Ansicht des Federelementes gemäß Fig. 3 zeigt,
- Fig. 9: eine teilweise geschnittene Vorderansicht der Scheibenbremse gemäß Fig. 1 während der Montage des Schwimmsattels zeigt, und
- Fig. 10: den Schwimmsattel gemäß Fig. 9, nachdem er an den Abstützarmen montiert ist, zeigt.

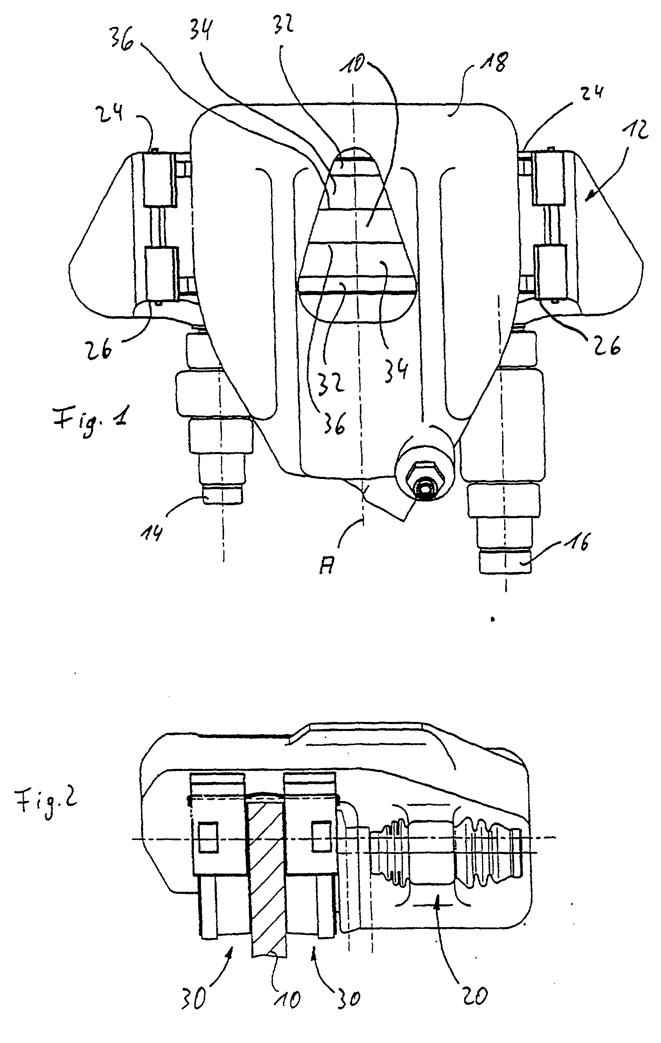

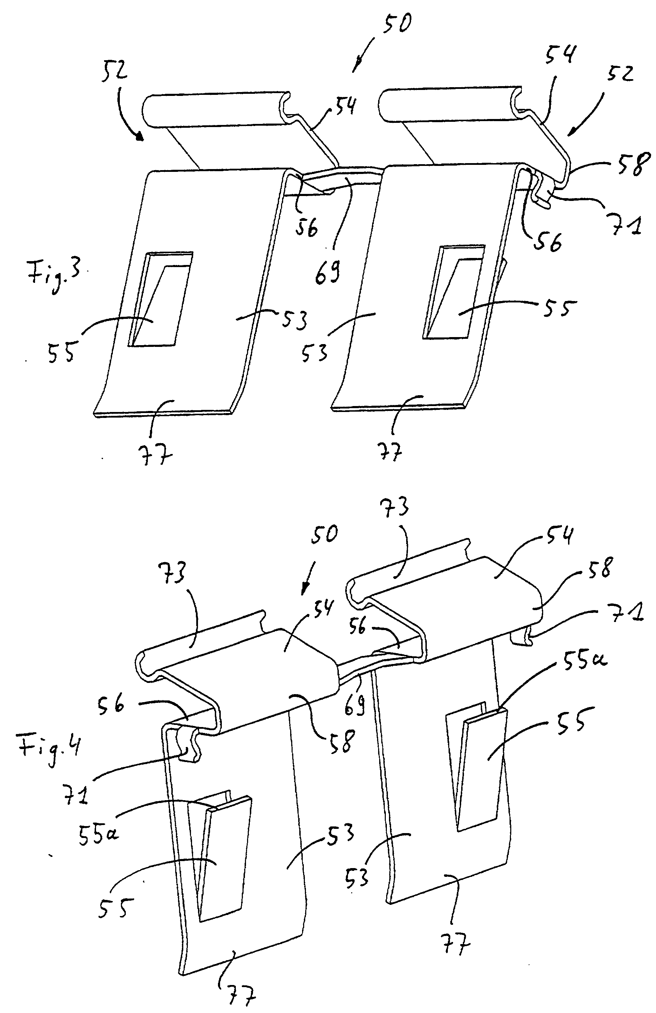

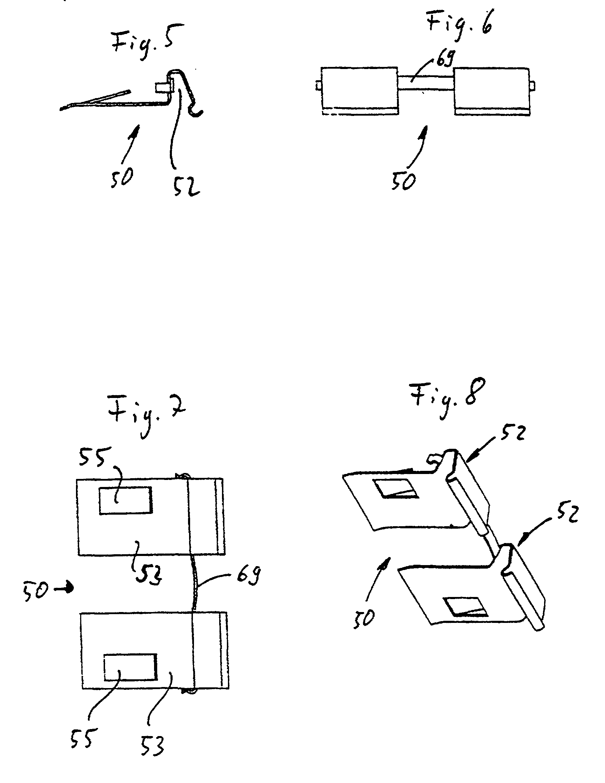

Die dargestellte Teilbelag-Scheibenbremse ist einer Bremsscheibe 10 zugeordnet, deren Rotationsachse A in Fig. 1 angedeutet ist. Die Bremse hat ein tragendes Bremsenteil, das im folgenden als Bremsträger 12 bezeichnet ist. Dieser Bremsträger 12 kann mit einem Achsschenkel integriert sein und umgreift im Einbauzustand die Bremsscheibe 10. Parallel zur Rotationsachse A ist am Bremsträger 12 ein Paar Führungsbolzen 14, 16 angeordnet, an denen ein Bremssattel 18 verschiebbar geführt ist.

Der Bremssattel 18 umgreift die Bremsscheibe 10 ebenfalls und weist an seiner in Bezug auf das Fahrzeug inneren Seite eine hydraulische Betätigungsvorrichtung 20 auf. Der Bremmsattel 18 kann sich auf diesen Führungen parallel zur Bremsscheibenachse verschieben. Die Führungsbolzen 14, 16 sind von allgemein bekannter Art, wobei die Hauptführung 16 den Schwimmsattel parallel ausrichtet und die Nebenführung 14 ein Schwenken des (Schwimm-)bremssattels 18 um die Achse der Hauptführung 16 verhindert.

An dem Bremsträger 12 sind beiderseits der Bremsscheibe 10 parallel zu dieser voneinander abgewandte Oberflächen 24 bzw. 26 ausgebildet. Im rechten Winkel dazu weist der Bremsträger 12 beiderseits der Bremsscheibe 10 je ein Paar einander zugewandter paralleler Führungsflächen 28 auf, zwischen denen je ein Bremsbelag 30 angeordnet ist.

Jeder Bremsbelag 30 hat eine Rückenplatte 32, beispielsweise aus Stahl, und einen Reibbelag 34 mit einer Belagfläche 36, die im Einbauzustand auch bei unbetätigter Bremse ständig parallel zur Bremsscheibe 10 und somit im rechten Winkel zu deren Rotationsachse A gehalten werden soll. Seitlich ist jede Rückenplatte 32 durch ein Paar paralleler Seitenflächen 40 begrenzt, die im Betrieb Bremskräfte je nach Drehrichtung der Bremsscheibe 10 über die eine oder andere Führungsfläche 28 auf den Bremsträger 12 übertragen.

Zwischen dem Bremsträger 12 und jedem der beiden Bremsbeläge 30 ist an beiden Stirnseiten der Bremsbeläge 30 je ein Federelement 50 eingespannt. Durch die Federelemente 50 werden die beiden Bremsbeläge 30 in Richtung auf die Rotationsachse A der Bremsscheibe 10 hin gedrängt. Außerdem bewirken die Federelemente 50, daß nach einer Bremsbewegung (durch eine auf die Bremsbeläge 30 wirkende Zustellbewegung der Betätigungsvorrichtung 20), die Bremsbeläge 30 wieder von der Bremsscheibe 10 wegbewegt werden.

Zur Erläuterung der Gestalt des Federelementes 50, dessen Montage zwischen dem Bremsträger 12 und den beiden Bremsbelägen 30 sowie des Zusammenwirkens zwischen dem Federelement 50, dem Bremsträger 12 und den beiden Bremsbelägen 30 wird auf die Fig. 3 bis 10 nachstehend Bezug genommen.

Das Federelement 50 weist zwei nebeneinander angeordnete U-oder V-förmige Klemmabschnitte 52 auf (siehe Fig. 3,4,5). Jeder dieser Klemmabschnitte 52 hat zwei Schenkel 54, 56, die durch einen Verbindungsbereich 58 miteinander verbunden sind.

Jeder der beiden Klemmabschnitte 52 ist für jeweils einen der Bremsbeläge 30 vorgesehen, um die Bremsbeläge 30 in einer zur Rotationsachse A der Bremsscheibe 10 senkrechten Position zu halten. Dies wird dadurch erreicht, daß die beiden Schenkel 54, 56 und der Verbindungsbereich 58 so bemessen sind, daß jeder Klemmabschnitt 52 einen Vorsprung 62 des jeweiligen Bremsbelages 30 umgreift.

Des weiteren weist jedes Federelement 50 zwei Führungsflächen 53 auf, die jeweils mit einem Klemmabschnitt 52 einstückig verbunden sind. Aus jeder der Führungsflächen 53 steht eine Zunge 55 abgewinkelt heraus, die einen Halte- bzw. Verrastabschnitt bilden, der die Bremsbeläge 30 mit dem Bremsträger 12 verrastet.

Im einzelnen wird dies dadurch erzielt, daß jede Zunge 55 ein freies Ende 55a aufweist, das von dem jeweiligen Klemmabschnitt 52 soweit beabstandet ist, daß jeweils ein Arm 28 des Bremsträgers 12 zwischen dem Klemmabschnitt 52 und dem freien Ende 55a der Zunge 55 eingespannt ist.

Die beiden Führungsflächen 53 sind miteinander durch einen Steg 69 verbunden, dessen Länge so bemessen ist, daß die Bremsscheibe 10 zwischen den beiden Führungsflächen 53 Raum findet, wobei der Steg 69 vorzugsweise an den jeweiligen Schenkeln 56 der beiden Klemmabschnitte 52 einstückig angeformt ist.

Jeder der Klemmabschnitte 52 weist an der dem Steg 69 abgewandten Außenseite einen S-förmigen federnden Haltearm 71 auf, der so gestaltet ist, daß er im montierten Zustand der Bremse jeweils an einem Arm 28 des Bremsträgers 12 anliegt.

In der Verlängerung der Zungen 55 weisen die beiden Führungsflächen 53 Abwinklungen 77 auf, durch die die Führungsflächen 53 in die entgegengesetzte Richtung auslaufen, wie die Zungen 55 weisen.

Die Rückenplatten 32 weisen ein- und auslaufseitige Ansätze 62 auf, in die Ausnehmungen 75 eingearbeitet sind.

Außerdem weist jeder der Klemmabschnitte 52 an der der jeweiligen Führungsfläche 53 abgewandten (im montierten Zustand oberen) Seite einen Eingriffsabschnitt 73 auf, der in die jeweilige entsprechende Ausnehmung 75 des jeweiligen Bremsbelages 30 federnd und formschlüssig eingreift, so daß die beiden Bremsbeläge 30 durch die beiden Klemmabschnitte 52 und die Eingriffsabschnitte 73 in vorbestimmter Position zueinander und mit dem Federelement 50 gehalten sind. Die Eingriffsabschnitte 73 und die entsprechenden Ausnehmungen 75 sind so gestaltet, daß sie eine Verschiebung der Bremsbeläge 30 in zu der Rotationsachse der Bremscheibe 10 paralleler Richtung erlauben.

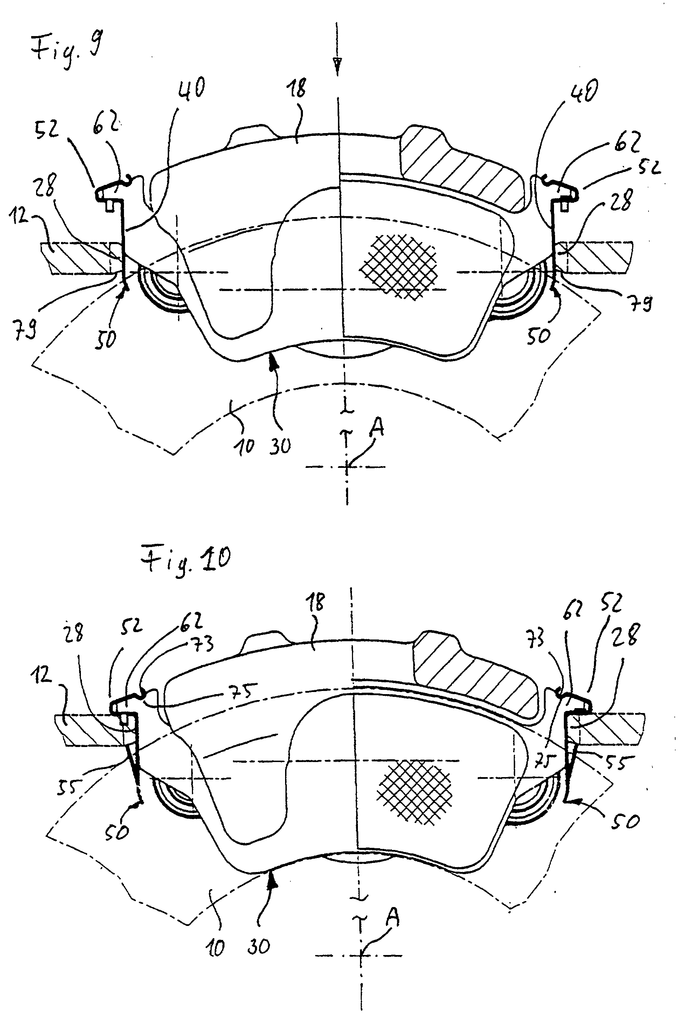

Die Fig. 9 und 10 veranschaulichen die Montage. Die Federelemente 50 werden mit den Klemmabschnitten 52 auf die Ansätze 62 der Rückenplatten 32 aufgeschoben. Dabei rasten die Eingriffsabschnitte 73 in die Ausnehmungen 75 ein. Die Bremsbeläge 30 werden in den Bremssattel 18 eingelegt und durch eine nicht weiter veranschaulichte Haltevorrichtung in dieser Lage vorläufig gehalten.

Zur Montage dieser Baueinheit auf dem als Achsschenkel ausgebildeten Bremsträger 12 wird der Bremssattel 18 mit den Bremsbelägen 30 und den beiden Federelementen 50 radial zur Rotationsachse A der Bremsscheibe 10 auf den Achsschenkel (bzw. den Bremsträger 12) geschoben. Dabei ermöglichen die Abwinklungen 77 der Federelemente 50 ein leichtes Einführen der Baueinheit zwischen die Abstützungen des Achsschenkels.

Kurz bevor die unteren Schenkel 56 der Klemmabschnitte 52 den oberen Rand der Arme 28 des Bremsträgers 12 erreichen, beginnen die federnden Zungen 55 sich aus der Ebene der seitlichen Führungsflächen 53 herauszubewegen. Sie schleifen dabei entlang den angeschrägten unteren Rändern 79 der Arme 28. Dadurch werden die Bremsbeläge 30 zuverlässig auf die Arme des Achsschenkels gezogen.

Die Lagesicherung der Federelemente 50 in axialer Richtung, - axial bezogen auf die Rotationsachse A - an dem Achsschenkel wird durch die Haltearme 71 erreicht.

Während des Bremsvorganges gleiten die Bremsbeläge 30 entlang der seitlichen Führungsflächen 53 und leiten auch über die Führungsflächen 53 die Umfangskräfte in den Bremsträger 12 bzw. den Achsschenkel ein. Des weiteren werden die Bremsbeläge 30 in den durch die oberen und unteren Schenkel 54, 56 gebildeten Nuten geführt und gehalten.

Die Federelemente 50 bestehen vorzugsweise aus nichtrostendem Werkstoff. Hierdurch wird ein Festrosten der Belagträgerplatten in den Abstützungen des Achsschenkels vermieden. Weiterhin wird durch die Verwendung eines nichtrostenden Werkstoffes die Wiederverwendung bei Austausch, Erneuerung der verschlissenen Bremsbeläge ermöglicht, sofern die Federelemente 50 nicht zu sehr beansprucht sind oder durch Hitzeeinwirkung verbraucht sind.

Die in Bezug zur Kolbenachse axialen Bewegungen der Bremsbeläge 30 erzeugen an den Führungsflächen 53 Kräfte, die die den Bremsbelägen 30 zugeordneten Hälften der Federelemente 50 aufeinander zuzubewegen bestrebt sind. Die Bewegung der Hälften der Federelemente 50 zueinander verformt den Steg 69. Dieser wird dabei auf Biegung oder Beulung beansprucht. Nach Entlastung der Bremse von hydraulischem Druck entspannt sich der Steg 69 und schiebt beide Bremsbeläge 30 von der Bremsscheibe 10 frei auf das vorbestimmte Bremslüftspiel. Die beiden Hälften der Federelemente 50 werden hauptsächlich durch die Reibung der Ansätze 62 in den durch die oberen und unteren Schenkel 54, 56 gebildeten Nuten aufeinander zu bewegt, wenn die Bremsbeläge 30 aufeinander zu bewegt werden.

Die beim Fahren verursachten Erschütterungen erzeugen zur Bremsscheibenachse A radial nach außen gerichtete Beschleunigungskräfte der Bremsbeläge 30. Diese Kräfte werden zuverlässig mittels der federnden Zungen 55 in die Arme 28 des Achsschenkels bzw. Bremsträgers 12 eingeleitet. Alle anderen Kraftkomponenten werden direkt in den Achsschenkel 12 geleitet, also ohne die Federelemente 50 als ganzes auf Biegung oder Beulung zu beanspruchen.

Zum Auswechseln verschlissener Bremsbeläge 30 werden die Befestigungsschrauben der Führungsbolzen gelöst. Dann wird der Bremssattel 18 von dem Achsschenkel 12 abgehoben. Die Bremsbeläge 30 können nun parallel zur Kolbenachse herausgezogen werden.

Neue Bremsbeläge werden dann ebenfalls axial zur Kolbenachse von der Seite her eingeschoben. Der Schwimmsattel wird aufgelegt und die Führungsbolzen werden wieder festgeschraubt.

Das Anschrauben des Bremssattels 18 ist einfach, da lediglich der Bremssattel 18 so auszurichten ist, daß die Gewindebohrungen im Achsschenkel 12 mit den Führungsbolzen übereinstimmen.

Während des Ausrichtens braucht lediglich die Gewichtskraft des Bremssattels 18 ausbalanciert zu werden, es müssen also keine zusätzlichen Kräfte oder deren in verschiedene Richtungen wirkende Komponenten ausbalanciert werden, wie dies oftmals durch herkömmliche Federelemente, die sich an dem Bremssattel 18 abstützen, hervorgerufen wird.

Grundsätzlich kann eine Niederhaltefeder dieser Art auch bei Bremsen mit einem Bremsträger, der nicht mit dem Achschenkel integriert ist, verwendet werden.

Durch die Erfindung können also die Bremsbeläge mit Federelementen, die keine Kräfte auf den Bremssattel ausüben, versehen werden. Die Konstruktion ist insbesondere für Bremsen vorgesehen, bei denen der Achsschenkel und der Bremsträger als ein einziges Teil ausgebildet sind und die Umfangskräfte direkt, in den Achsschenkel eingeleitet werden.

## Patentansprüche

1. Teilbelagscheibenbremse mit
- einem Bremsträger (12), an dem mit Hilfe wenigstens eines Federelements (50) zwei im Abstand zueinander angeordnete Bremsbeläge (30) gehaltert sind, die zwischen sich eine sich um eine Rotationsachse (A) drehende Bremsscheibe (10) aufnehmen, und
- einem an dem Bremsträger (12) angeordneten Bremssattel (18), der die Bremsbeläge (30) und die Bremsscheibe (10) übergreift, wobei
- das Federelement (50) wenigstens einen Klemmabschnitt (52) für jeden der Bremsbeläge (30) aufweist, so daß die Bremsbeläge (30) in einer zur Rotationsachse (A) senkrechten Position gehalten sind, wobei die Bremsbeläge (30) in den Bremssattel (18) einbringbar sind, so daß die Bremsbeläge (30) mit dem Bremssattel (18) eine Baueinheit bilden,
- das Federelement (50) wenigstens einen Halteabschnitt (55) aufweist, der das Federelement (50) nach Montage der Baueinheit in den Bremsträger (12) radial hält, und
- das Federelement (50) zwei Führungsflächen (53) aufweist, die jeweils mit einem Klemmabschnitt (52) verbunden sind, **dadurch gekennzeichnet, daß**
- aus jeder der Führungsflächen (53) wenigstens eine federnde Zunge (55) abgewinkelt heraussteht, die den Halteabschnitt bildet und die Bremsbeläge (30) mit dem Bremsträger (12) verrastet, so daß die Baueinheit zur Rotationsachse (A) radial montierbar ist.

2. Teilbelagscheibenbremse nach Anspruch 1, **dadurch gekennzeichnet, daß**
- jeder Klemmabschnitt (52) des Federelementes (50) einen U-oder V-förmigen Bügelabschnitt aufweist, bei dem ein zwischen zwei Schenkeln (54, 56) angeordneter Verbindungsbereich (58) vorhanden ist, wobei die beiden Schenkel und der Verbindungsbereich so bemessen sind, daß der Klemmabschnitt (52) einen Vorsprung (62) des jeweiligen Bremsbelages (30) umgreift.

3. Teilbelagscheibenbremse nach Anspruch 1 oder 2, **dadurch gekennzeichnet, daß**
- jede Zunge (55) ein freies Ende (55a) aufweist, das von dem jeweiligen Klemmabschnitt (52) soweit beabstandet ist, daß jeweils ein Arm (28) des Bremsträgers (12) zwischen dem Klemmabschnitt (52) und dem freien Ende (55a) der Zunge (55) eingespannt ist.

4. Teilbelagscheibenbremse nach Anspruch 3, **dadurch gekennzeichnet, daß**
- das Federelement (50) zwei Hälften mit je einer Führungsfläche (53) und je wenigstens einem Klemmabschnitt (52) aufweist und die zwei Hälften des Federelements (50) miteinander durch einen Steg (69) verbunden sind, der so bemessen ist, daß die Bremsscheibe zwischen den beiden Führungsflächen (53) Raum findet, wobei der Steg (69) vorzugsweise zwischen den beiden Klemmabschnitten (52) ausgebildet ist und die Bremsbeläge (30) nach einer Zustellbewegung wieder voneinander wegbewegt.

5. Teilbelagscheibenbremse nach Anspruch 4, **dadurch gekennzeichnet, daß**
- jeder der Klemmabschnitte (52) an der dem Steg (69) abgewandten Außenseite einen Haltearm (71) aufweist, der jeweils an einem Arm (28) des Bremsträgers (12) anliegt.

6. Teilbelagscheibenbremse nach Anspruch 4 oder 5, **dadurch gekennzeichnet, daß**
- jeder der Klemmabschnitte (52) an der der jeweiligen Führungsfläche (53) abgewandten Seite einen Eingriffsabschnitt (73) aufweist, der in eine entsprechende Ausnehmung (75) des jeweiligen Bremsbelages (30) eingreift.

7. Teilbelagscheibenbremse nach einem der Ansprüche 1 - 6, **dadurch gekennzeichnet, daß**
- der Bremsträger (12) mit einem Achsschenkel integriert ausgeführt ist.

8. Federelement (50) für eine Teilbelagscheibenbremse mit
- einem Bremsträger (12), an dem mit Hilfe des Federelements (50) zwei im Abstand zueinander angeordnete Bremsbeläge (30) gehaltert sind, die zwischen sich eine sich um eine Rotationsachse (A) drehende Bremsscheibe (10) aufnehmen, wobei das Federelement wenigstens einen Klemmabschnitt (52) für je einen Bremsbelag (30), wenigstens einen Halteabschnitt (55) und zwei Führungsflächen (53) aufweist, die mit jeweils einem Klemmabschnitt (52) verbunden sind, **dadurch gekennzeichnet, daß**
- aus jeder der Führungsflächen (53) wenigstens eine federnote Zunge (55) abgewinkelt heraussteht, die den Halteabschnitt zum Verrasten eines Bremsbelages (30) mit einem Bremsträger (12) bei bezüglich der Rotationsachse (A) radialer Montage der Bremsträger bildet.

9. Federelement nach Anspruch 8, **dadurch gekennzeichnet, daß**
- jeder Klemmabschnitt (52) einen U- oder V-förmigen Bügelabschnitt aufweist, bei dem ein zwischen zwei Schenkeln (54, 56) angeordneter Verbindungsbereich (58) vorhanden ist.

10. Federelement nach Anspruch 8 oder 9, **dadurch gekennzeichnet, daß**
- es zwei Hälften mit je einer Führungsfläche (53) und je wenigstens einem Klemmabschnitt (52) aufweist und die zwei Hälften des Federelements miteinander durch einen Steg (69) verbunden sind, der so bemessen ist, daß eine Bremsscheibe (30) zwischen den beiden Führungsflächen (53) Raum findet, wobei der Steg (69) vorzugsweise zwischen den beiden Klemmabschnitten (52) ausgebildet ist und die Klemmabschnitte (52) nach einer Zustellbewegung wieder voneinander wegbewegt.

11. Federelement nach einem der Ansprüche 8 bis 10, **dadurch gekennzeichnet, daß**
- jeder der Klemmabschnitte (52) an der dem Steg (69) abgewandten Außenseite einen Haltearme (71) zum Anliegen an einem Bremsträger (12) aufweist.

12. Federelement nach einem der Ansprüche 8 bis 11, **dadurch gekennzeichnet, daß**
- jeder der Klemmabschnitte (52) an der der jeweiligen Führungsfläche (53) abgewandten Seite einen Eingriffsabschnitt (73) zum Eingreifen in eine entsprechende Ausnehmung (75) eines Bremsbelages (30) aufweist.

## Claims

1. A spot-type disc brake, comprising
- a brake support (12) at which two brake linings (30) which are arranged at a spaced relationship to each other are secured by means of at least one spring element (50) and between which a brake disc (10) rotating about an axis of rotation (A) is accommodated, and
- a brake caliper (18) arranged at the brake support (12) which straddles the brake linings (30) and the brake disc (10), wherein
- the spring element (50) comprises at least one clamping section (52) for each of the brake linings (30) so that the brake linings (30) are maintained in a position vertical to the axis of rotation (A), with the brake linings (30) being adapted to be inserted in the brake caliper (18) so that the brake linings (30) form a structural unit with the brake caliper (18),
- the spring element (50) comprises at least one locking section (55) which keeps the spring element (50) radially in the brake brake support (12) after the assembly of the unit, and
- the spring element (50) comprises two guide surfaces (53) each of which is connected with a clamping section (52),
- **characterised in that**
- at least one resilient tongue (55) protrudes under an angle from each of the guide surfaces (53), which forms the locking section and locks the brake linings (30) with the brake support such that the structural unit can be mounted radially with respect to the axis of rotation (A).

2. The spot-type disc brake according to Claim 1, **characterised in that**
- each clamping section (52) of the spring element (50) comprises a U-shaped or V-shaped yoke section with a connecting area (58) arranged between two legs (54, 56), with the two legs and the connecting area being dimensioned in such a manner that the clamping section (52) encompasses a protrusion (62) of the respective brake lining (30).

3. The spot-type disc brake according to Claim 1 or 2, **characterised in that**
- each tongue (55) comprises a free end (55a) which has such a distance from the respective clamping section (52) that one link (28) each of the brake support (12) is clamped between the clamping section (52) and the free end (55a) of the tongue (55).

4. The spot-type disc brake according to Claim 3, **characterised in that**
- the spring element (50) comprises two halves each having a guide surface (53) and at least one clamping section (52) and that the two halves of the spring element (50) are connected by a web (69) which is dimensioned such that the brake disc can be accommodated between the two guide surfaces (53), with the web (69) being formed preferably between the two clamping sections (52) and moving the brake linings (30), after a feed motion, again away from each other.

5. The spot-type disc brake according to Claim 4, **characterised in that**
- each of the clamping sections (52) comprises a holding arm (71) at the outer surface facing away from the web (69), which arm abuts a link (28) of the brake support (12) each.

6. The spot-type disc brake according to Claim 4 or 5, **characterised in that**
- each of the clamping sections (52) comprises an engagement section (73) at the side facing away from the respective guide surface (53), which engages into a corresponding recess (75) of the respective brake lining (30).

7. The spot-type disc brake according to one of Claims 1 to 6, **characterised in that**
- the brake support (12) is designed as an integral component with a steering swivel.

8. A spring element (50) for a spot-type disc brake, comprising
- a brake support (12) at which two brake linings (30) which are arranged at a spaced relationship to each other are secured by means of the spring element (50) and between which a brake disc rotating about an axis of rotation (A) is accommodated, wherein the spring element comprises at least one clamping section (52) for one brake lining (30) each, at least one holding section (55) and two guide surfaces (53) each of which is connected with a clamping section (52), **characterised in that**
- at least one resilient tongue (55) protrudes under an angle from each of the guide surfaces (53), which forms the holding section for locking a brake linings (30) with a brake support (12) with an assembly of the brake support being radial relative to the axis of rotation (A).

9. The spring element according to Claim 8, **characterised in that**
- each clamping section (52) comprises a U-shaped or V-shaped yoke section with a connecting area (58) being provided between two legs (54, 56).

10. The spring element according to Claim 8 or 9, **characterised in that**
- it comprises two halves with a guide surface (53) and at least one clamping section (52) each and the two halves of the spring element are connected with each other by a web (69) which is dimensioned such that a brake disc (30) can be accommodated between the two guide surfaces (53), with the web being formed preferably between the two clamping sections (52) and moving the brake linings (30), after a feed motion, again away from each other.

11. The spring element according to one of Claims 8 to 10, **characterised in that**
- each of the clamping sections (52) comprises a holding arm (71) at the outer surface facing away from the web (69) for resting against a brake support (12).

12. The spring element according to one of Claims 8 to 11, **characterised in that**
- each of the clamping sections (52) comprises an engagement section (73) at the side facing away from the respective guide surface (53) for engaging into a corresponding recess (75) of a brake lining (30).

## Revendications

1. Frein à disque à garniture partielle comprenant
- un support de frein (12), sur lequel sont maintenues, à l'aide d'au moins un élément élastique (50), deux garnitures de frein (30) disposées espacées l'une de l'autre qui reçoivent entre elles un disque de frein (10) tournant autour d'un axe de rotation (A), et
- un étrier de frein (18) disposé sur le support de frein (12), qui chevauche les garnitures de frein (30) et le disque de frein (10),
- l'élément élastique (50) présentant au moins une portion de serrage (52) pour chacune des garnitures de frein (30), de telle façon que les garnitures de frein (30) soient maintenues dans une position perpendiculaire à l'axe de rotation (A), les garnitures de frein (30) pouvant être introduites dans l'étrier de frein (18) de façon que les garnitures de frein (30) forment avec l'étrier de frein (18) une unité constitutive,
- l'élément élastique (50) présentant au moins une portion d'arrêt (55) qui maintient l'élément élastique (50) radialement après le montage de l'unité constitutive dans le support de frein (12), et
- l'élément élastique (50) présentant deux surfaces de guidage (53) qui sont reliées chacune à une portion de serrage (52), **caractérisé en ce que**
- au moins une languette (55) élastique pliée sort de chacune des surfaces de guidage (53), qui forme la portion d'arrêt et crée une liaison mécanique entre les garnitures de frein (30) et le support de frein (12) de telle façon que l'unité constitutive puisse être montée radialement par rapport à l'axe de rotation (A).

2. Frein à disque à garniture partielle selon la revendication 1, **caractérisé en ce que**
- chaque portion de serrage (52) de l'élément élastique (50) présente une portion en étrier en forme de U ou de V, dans laquelle il y a une zone de liaison (58) disposée entre deux branches (54, 56), les deux branches et la zone de liaison étant dimensionnées de telle façon que la portion de serrage (52) enveloppe une partie en saillie (62) de la garniture de frein (30) respective.

3. Frein à disque à garniture partielle selon la revendication 1 ou 2, **caractérisé en ce que**
- chaque languette (55) présente une extrémité libre (55a) qui est espacée de la portion de serrage (52) respective d'une distance telle qu'un bras (28) du support de frein (12) soit encastré entre la portion de serrage (52) et l'extrémité libre (55a) de la languette (55).

4. Frein à disque à garniture partielle selon la revendication 3, **caractérisé en ce que**
- l'élément élastique (50) présente deux moitiés comprenant chacune une surface de guidage (53) et chacune au moins une portion de serrage (52) et les deux moitiés de l'élément élastique (50) sont reliées entre elles par une barrette (69) qui est dimensionnée de telle façon que le disque de frein trouve place entre les deux surfaces de guidage (53), la barrette (69) étant formée de préférence entre les deux portions de serrage (52) et écartant à nouveau l'une de l'autre les garnitures de frein (30) après un mouvement d'approche.

5. Frein à disque à garniture partielle selon la revendication 4, **caractérisé en ce que**
- chacune des portions de serrage (52) présente du côté extérieur opposé à la barrette (69) un bras d'arrêt (71) qui s'applique respectivement contre un bras (28) du support de frein (12).

6. Frein à disque à garniture partielle selon la revendication 4 ou 5, **caractérisé en ce que**
- chacune des portions de serrage (52) présente du côté opposé à la surface de guidage (53) respective une portion d'enclenchement (73) qui s'enclenche dans un creux (75) correspondant de la garniture de frein (30) respective.

7. Frein à disque à garniture partielle selon l'une quelconque des revendications 1 - 6, **caractérisé en ce que**
- le support de frein (12) est réalisé intégré à une articulation.

8. Elément Elastique (50) pour un frein à disque à garniture partielle comprenant un support de frein (12), sur lequel sont maintenues à l'aide de l'élément élastique (50) deux garnitures de frein (30) disposées espacées l'une de l'autre qui reçoivent entre elles un disque de frein (10) tournant autour d'un axe de rotation (A), l'élément élastique présentant au moins une portion de serrage (52) pour une garniture de frein (30) respective, au moins une portion d'arrêt (55) et deux surfaces de guidage (53) qui sont reliées chacune à une portion de serrage (52) respective, **caractérisé en ce que**
- au moins une languette (55) élastique pliée sort de chacune des surfaces de guidage (53), qui forme la portion d'arrêt pour créer une liaison mécanique d'une garniture de frein (30) avec un support de frein (12) lors d'un montage radial par rapport à l'axe de rotation (A) du support de frein.

9. Elément élastique selon la revendication 8, **caractérisé en ce que**
- chaque portion de serrage (52) présente une portion en étrier en forme de U ou de V, dans laquelle il y a une zone de liaison (58) disposée entre deux branches (54, 56).

10. Elément élastique selon la revendication 8 ou 9, **caractérisé en ce que**
- il présente deux moitiés comprenant chacune une surface de guidage (53) et chacune au moins une portion de serrage (52) et les deux moitiés de l'élément élastique sont reliées entre elles par une barrette (69) qui est dimensionnée de telle façon qu'un disque de frein (30) trouve place entre les deux surfaces de guidage (53), la barrette (69) étant formée de préférence entre les deux portions de serrage (52) et écartant à nouveau les portions de serrage (52) l'une de l'autre après un mouvement d'approche.

11. Elément élastique selon l'une quelconque des revendications 8 à 10, **caractérisé en ce que**
- chacune des portions de serrage (52) présente du côté extérieur opposé à la barrette (69) un bras d'arrêt (71) destiné à s'appliquer contre un support de frein (12).

12. Elément élastique selon l'une quelconque des revendications 8 à 11, **caractérisé en ce que**
- chacune des portions de serrage (52) présente du côté opposé à la surface de guidage (53) respective une portion d'enclenchement (73) destinée à s'enclencher dans un creux (75) correspondant d'une garniture de frein (30).
